# EUROPEAN PATENT APPLICATION

(11) **EP 3 772 712 A1**
(43) Date of publication of application: **10.02.2021**
(21) Application number: 19190552.0
(22) Date of filing: 07.08.2019
(51) Int. Cl.: G06Q 10/06, G06Q 10/08

(54) **DATA VISIBILITY OF PRODUCTS AND SERVICES USING LINKED DATA**

(71) Applicant: Mastercard International Incorporated, Purchase NY 10577 (US)
(72) Inventor: Qureshi, Uzair, Dublin, D06 AD82 (IE)
(74) Representative: Barker Brettell LLP

(57) **Abstract**

A computer implemented method of providing supply chain intelligence (156) is disclosed. The method comprises receiving, at a server of a payment processing network (150), a plurality of payment records (152), wherein each payment record (152) results from an account holder (120) tendering payment to a merchant (130) for a product/service to authorise a transfer of funds (172) from an issuer account to an acquirer account using an account identifier, wherein the payment record (152) comprises RDF data, and the payment record (152) comprises product/service information identifying the product/service. A payment graph database (154) is generated from the payment records (152). Payment data (211, 212...21n) is extracted from the payment graph database (154), and the payment data (211, 212...21n) is processed to determine the supply chain intelligence (156).

## Description

### FIELD OF INVENTION

The present disclosure relates to a method and system for obtaining supply chain intelligence.

### BACKGROUND

Currently, information relating to goods and services provided and consumed by corporations tends to exist in tabular form (e.g. in spreadsheets and relational database), in silos. Each entity may hold information on sales of its own products and services, but no information about this is passed downstream (to customers) or upstream (to suppliers). Each entity is responsible for performing analytics on the data. The partitioning of the data between different entities makes it difficult to draw complex inferences from the data. Significant and complex technology investments may be required for each entity to perform analytics even on their own data, which may result in significant delay and further costs to share information with any partnering entities.

Sharing of data between entities is limited. In many cases, data may be amassed by an entity over a significant period before it is shared (e.g. months or years) before being made available for analytics. This potentially renders the output of such analytics obsolete or untimely, limiting the insights that can be derived.

Accordingly, commercial ecosystem participants are typically unable to receive effective supply chain and logistical intelligence, beyond what they can derive from their own data, and from publically available news. For a small business, such intelligence may be limited.

### SUMMARY

According to the invention, there is provided a computer implemented method of providing supply chain intelligence, comprising:
receiving, at a server of a payment processing network, a plurality of payment records, wherein each payment record results from an account holder tendering payment to a merchant for a product/service to authorise a transfer of funds from an issuer account to an acquirer account using an account identifier, wherein each payment record comprises RDF data, and each payment record comprises: product/service information identifying the product/service, and merchant information identifying the merchant;
generating a payment graph database from the payment records;
extracting payment data from the payment graph database;
processing the payment data to determine the supply chain intelligence.

The method may comprise linking the payment graph database to an open database hosted on an external server (for example, the linked open data cloud).

The step of extracting data may further comprise extracting open data from the open database and linking this to the payment data, and the step of processing comprises processing the payment data and open data to determine the supply chain intelligence.

The open data may comprise at least one of: weather data; transportation disruption data; sentiment analysis data; and maintenance data.

The method may further comprise identifying supply chains comprising a sequence of transactions between sequential merchants comprising the same product/service information.

A schema of the payment records may be selected to be consistent with a schema defined in the open database, so that data hosted in the open database can be related to data in the payment graph database.

Extracting the data from the payment graph database may comprises using a GraphQL or SPARQL query to extract data from the payment graph database.

Processing the data to determine the supply chain intelligence may comprise providing the data to a neural network, for example a sub-graph or other information extracted from both the payment data and linked external data may be provided as an input vector to a neural network.

The supply chain intelligence may comprise a gross profit margin for a merchant.

The supply chain intelligence may comprise a supply chain disruption and/or a service level agreement overrun.

The payment record may comprises a payment amount.

The product/service information comprises a global trade item number.

The product/service information may comprise a URI indicating the product/service.

The payment may be via a terminal.

According to a second aspect, there is provided a non-transitory, machine readable medium for configuring a computer system to implement the method according to the first aspect.

According to a third aspect, there is provided a computing system configured to perform the method according to the first aspect.

### DETAILED DESCRIPTION

Example embodiments will be described, with reference to the accompanying drawings, in which:
Figure 1 illustrates the extraction of supply chain intelligence from a payment graph database and public open data in accordance with embodiments;
Figure 2 is a schematic of an embodiment of a system for determining supply chain intelligence;
Figure 3 is a schematic of an example payment information payload;
Figure 4 is a schematic of public open data obtained from corporations, organisations, and governments;
   ; and
Figure 5 is an example sub-graph extracted from a payment graph database and public open data in accordance with embodiments; and
Figure 6 is schematic of a four party payment system.

Embodiments of the present disclosure are described more fully hereinafter with reference to the accompanying drawings, in which some, but not all, embodiments of the present disclosure are shown. Indeed, the present disclosure can be embodied in many different forms and should not be construed as limited to the embodiments set forth herein. Rather, these embodiments are provided so that this disclosure clearly satisfies applicable legal requirements. Like numbers refer to like elements throughout.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when stated that something is "based on" something else, it can be based on one or more other things as well. In other words, unless expressly indicated otherwise, as used herein "based on" means "based at least in part on" or "based at least partially on."

As used herein, "entity" or "entities" includes one or more persons, organizations, businesses, institutions and/or other entities such as financial institutions, services providers, and the like that implement one or more portions of one or more of the embodiments described and/or contemplated herein. In particular, entities include a person, business, school, club, an organization having members in a particular trade or profession, sales representative for particular products, charity, not-for-profit organization, labour union, local government, government agency, or political party.

As used herein, "merchant" means a business, company, employer, seller, vendor, supplier, representative of the merchant including, but not limited to, sales persons, agents, clerks, employees, managers, officers, suppliers, contractors, and the like. A merchant can be any person or company engaged in the purchase and/or sale of goods and/or services.

As used herein, "transaction" means any interaction between a business and its customers, vendors, suppliers and others with whom they do business, typically a point of sale for the purpose of selling and buying products and/or services. The businesses can include, for example, retailers, entertainment and toy companies, restaurants, and the like. The products and services can include, for example, family fun, sports, restaurants, events, groceries, apparel, beverages, beauty products, books and magazines, foods, health care, household, furniture, office, personal care, pet care, photography, and the like.

The steps and/or actions of a method described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to the processor, so that the processor can read information from, and write information to, the storage medium. In the alternative, the storage medium can be integral to the processor. Further, in some embodiments, the processor and the storage medium reside in an Application Specific Integrated Circuit (ASIC). In the alternative, the processor and the storage medium can reside as discrete components in a computing device. Additionally, in some embodiments, the events and/or actions of a method can reside as one or any combination or set of codes and/or instructions on a machine-readable medium and/or computer-readable medium, which can be incorporated into a computer program product.

In one or more embodiments, the functions described can be implemented in hardware, software, firmware, or any combination thereof. If implemented in software, the functions can be stored or transmitted as one or more instructions or code on a computer-readable medium. Computer-readable media includes both computer storage media and communication media including any medium that facilitates transfer of a computer program from one place to another. A storage medium can be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures, and that can be accessed by a computer. Also, any connection can be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Computer program code for carrying out operations of embodiments of the present disclosure can be written in an object oriented, scripted or unscripted programming language such as Java, Perl, Smalltalk, C++, or the like. However, the computer program code for carrying out operations of embodiments of the present disclosure can also be written in conventional procedural programming languages, such as the "C" programming language or similar programming languages.

Embodiments of the present disclosure are described herein with reference to flowchart illustrations and/or block diagrams of methods, apparatus (systems), and computer program products. It should be understood that each block of the flowchart illustrations and/or block diagrams, and/or combinations of blocks in the flowchart illustrations and/or block diagrams, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create mechanisms for implementing the functions/acts specified in the flowchart and/or block diagram block or blocks.

These computer program instructions can also be stored in a computer-readable memory that can direct a computer or other programmable data processing apparatus to function in a particular manner so that the instructions stored in the computer readable memory produce an article of manufacture including instruction means that implement the function/act specified in the flowchart and/or block diagram block(s).

The computer program instructions can be loaded onto a computer or other programmable data processing apparatus to cause a series of operational steps to be performed on the computer or other programmable apparatus to produce a computer-implemented process so that the instructions that execute on the computer or other programmable apparatus provide steps for implementing the functions/acts specified in the flowchart and/or block diagram block(s).

Most modern day monetary transactions are processed through payment processing networks. For example, MasterCard Worldwide Network is an example payment processing network. The MasterCard Worldwide Network is one of the world's largest global telecommunications networks linking all MasterCard members and MasterCard data processing centres into a single financial network. The MasterCard Worldwide Network routes payment transactions between the Master Card members from almost anywhere in the world and facilitates their authorization, clearing, and settlement.

Payment processing networks form an integral part of what is commonly known as a "four-party" payment system. In the four party payment system, transfers may occur between two financial institutions (serving respective customers) that do not have a contractual relationship with each other and are possible because they are the members of the system. Typical four parties in the four party payment system are an account holder, a merchant, an issuing financial institution (issuer), and an acquiring financial institution (acquirer). The account holder and merchant may each be an individual or any other entity.

The account holder is a customer of the issuer. The issuer maintains an account for the account holder, and also often provides the account holder with a payment device in association with the account, commonly in the form of an Integrated Circuit Card (ICC), such as a MasterCard payment card. The role of the payment device is to provide an account identifier and any other information necessary for processing a payment transaction while ensuring the appropriate level of security for the underlying data. Payment transaction processing often requires verification of the payment device holder that includes evaluation of whether the person presenting the payment device is the legitimate holder of the payment device. The payment device may not be a physical device, but may comprise a set of virtual credentials, for example stored in a virtual wallet or other computer implemented payment system.

The merchant is typically a seller of goods or services to individuals and/or businesses, and is a customer of the acquirer. The acquirer maintains an account of the merchant and facilitates receiving of funds by the merchant once the payment transactions clear.

The payment network acts as a fifth party which links the four parties involved in the payment process, thereby facilitating the authorisation, clearing, and settlement of the payment transactions.

Each payment transaction typically requires a number of exchanges between the parties. These exchanges may generally be viewed as being conducted in four stages: (1) interaction, (2) authorisation, (3) clearing, and (4) settlement.

At the interaction stage, the merchant acquires account credentials of the account holder, such as the payment device credentials. For example, a POS terminal of the merchant may be used to read the payment device credentials, including the account holder's account information, from a chip or a secure element embedded in the payment device of the account holder (e.g. via near field communication). In an internet transaction, payment credentials may be input by a user into a web form, or recalled from a stored virtual wallet. In a business-to business transaction, account credentials may be provided by the account holder to the merchant directly.

During the authorisation stage, the account credentials and the availability of funds in the respective account are confirmed. The merchant transmits electronically the captured data to the acquirer, requesting authorisation of the payment transaction. The request may also include the transaction amount.

The payment processing network enables the acquirer to forward the authorisation request to the issuer, who determines whether to authorise or decline the payment transaction. If the issuer authorises the payment, it decreases availability of funds on the account of the account holder and issues an authorisation code to the merchant.

The authorisation code is then transmitted back to the merchant through the payment processing network and the acquirer.

During the clearing stage, the payment processing network facilitates transmission of the transaction data between the parties to ensure that all parties have the necessary and correct information for settling the transaction, and that the transaction is settled according to the payment guidelines and rules established by the payment processing network. Finally, during the settlement stage, the payment system network facilitates the exchange of funds so that the appropriate parties are paid in relation to the transaction.

To facilitate authorisation, clearing, and settlement of the payment transactions, the payment processing network requires and collects various data in relation to the payment transactions. Such data may include (but is not limited to) at least one of: an acquirer ID (identification data), acceptor ID (Merchant ID), merchant name, merchant category code (MCC), stock keeping unit (SKU) identifying items in the transaction, and transaction amount. Generally, data exchange in respect of a payment transaction is more detailed during the clearing stage than during the authorisation stage. For example, the SKU description associated with a particular payment transaction may become known to the payment processing network only at the clearing stage.

The description of the parties in the four party system is based on the direction of a payment transaction. Therefore, the same entity may function as an account holder and as a merchant in different payment transactions. This is particularly common in business-to-business trans actions, where the same business may act as a buyer in one transaction and as a seller in another transaction. Similarly, the same financial institution may act as the acquirer or as the issuer depending on whether its customer is a seller or a buyer in a particular payment transaction.

For example, a merchant that is in the business of selling computers may buy components (e.g., hard drivers) from other merchant(s) (Supplier merchants) to manufacture its goods computers. Therefore, although the merchant acts as a seller (Supplier merchant) when it sells the computers, it also acts as a buyer (a buyer merchant) when it buys components to make the computers it ultimately sells.

Accordingly, using the terminology of the four party system, as the buyer merchant, the merchant acts as an account holder, while its financial institution acts as an issuer. The supplier merchant however may also be a buyer merchant, and thus also act as an account holder in the terms of the four party system. For example, the supplier merchant may need to acquire components, e.g., circuit boards, for manufacturing its goods, i.e., hard drives.

A payment processing network may facilitate payment transactions for any number of merchants that act as sellers and/or buyers. Such merchants may form one or more supply networks. Merchants in a particular supply network may be in the same geographic region and/or be spread across the globe. A supply network generally includes a plurality of supply chains,

A supply chain is typically a plurality of supplier merchants arranged sequentially, with each supplier merchant supplying its products to the next downstream supplier merchant in the supply chain. A supply chain may include a plurality of branches and/or loops. A given merchant may receive the same product/service from a plurality of supplier merchants. Also a given single supplier merchant may supply the same product/service to a plurality of merchants and/or supplier merchants downstream a supply chain. With the exception of the originator(s) of the supply chain, each of the supplier merchants in the supply chain also acts as the buyer merchant in its transactions upstream the supply chain. In the context of this disclosure, the end-buyer merchant of a particular supply chain, or its selected sub-chain, may be generally referred to as a merchant, while the remaining supplier merchants in the supply chain, or the sub-chain, including the originator(s), are referred to as suppliers.

Some supply networks may include rather extensive supply chains, in which a merchant may not be aware of supplier(s) that exist and form the supply chain, other than of supplier(s) with whom the merchant deals directly (or is separated from the merchant by one or two degrees). Consequently, when a problem with the supply (e.g., undelivered goods, different quality goods, and the like) to the merchant arises, it may not know of the reason that caused the problem (what supplier triggered the problem in the supply chain). Moreover, even when the merchant knows its suppliers, the suppliers may not be forthcoming with information that a problem with the supply may arise and its reasons. Therefore, merchants may address supply problems only after their occurrence. This sometimes causes a production break and merchant's products being out of stock, thereby reducing the merchant's profits. Furthermore, remedying problems is often more expensive than preventing such problems from occurring, both in money and resource terms.

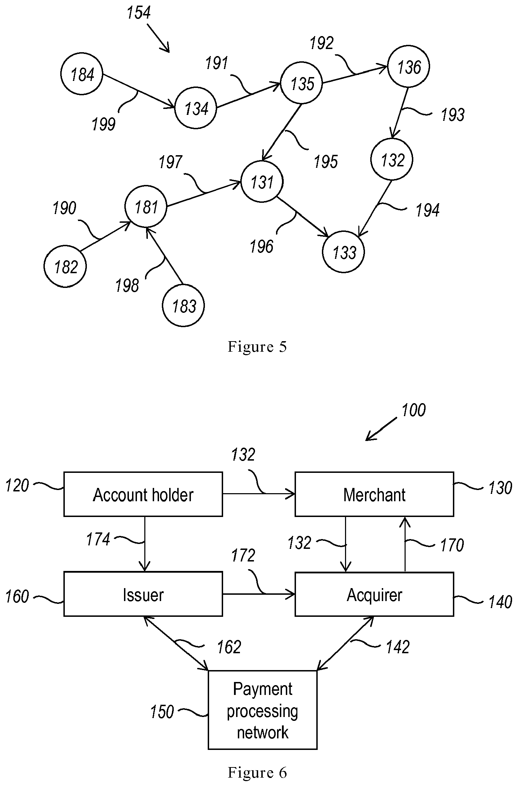

Referring to Figure 6, there is shown a four party payment (credit, debit or other) payment system 100. In system 100, account holder 120 submits a payment device (e.g. a payment card) to the merchant 130. The merchant's POS device communicates 132 with his acquiring bank or acquirer 140, which acts as a payment processor. The acquirer 140 initiates, at 142, the transaction on the payment processing network 150. The payment processing network 150 routes, via 162, the transaction to the issuing bank or payment device issuer 160, which is identified using information in the transaction message. The issuer 160 approves or denies an authorization request, and then routes, via the payment processing network 150, an authorization response back to the acquirer 140. The acquirer 140 sends approval to the POS device of the merchant 130. Thereafter, seconds later, the account completes the purchase and typically receives a receipt.

The account of the merchant 130 is credited, via 170, by the acquirer 140. The issuer 160 pays, via 172, the acquirer 140. Eventually, the account holder 120 pays, via 174, the issuer 160.

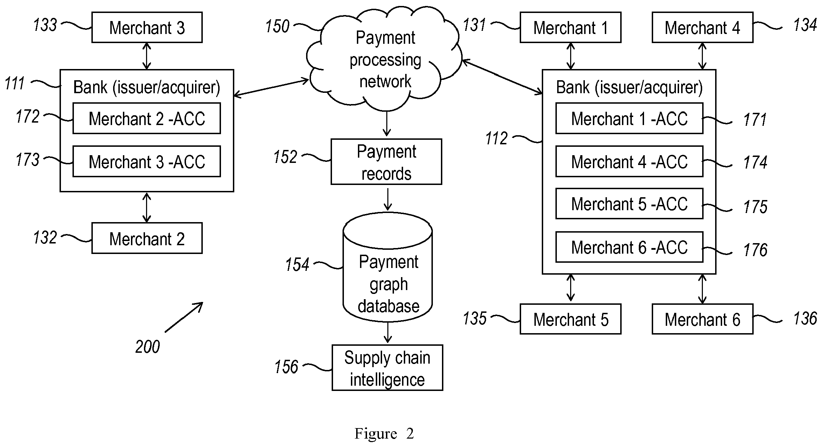

Figure 2 is a diagram of a multi-party payment transaction system 200 according to an embodiment. The system 200 includes a number of financial institutions (banks) 111, 112, who can act as issuers and acquirers and are connected through a payment processing network 150. Each of the financial institutions 111, 112 have one or more merchants associated them such as merchants 131 to 136. Merchants may act as suppliers, as discussed above, so may be both account holders and merchants, depending on the transaction being considered. For convenience, parties in supply chains are generally referred to herein as simply merchants.

Each of the financial institutions 111, 112 maintains accounts for the corresponding merchants. The bank 111 maintains a merchant accounts 172, 173 for merchants 132, 133. The bank 112 maintains merchant accounts 171, 174, 175, 176 for the merchants 131, 134, 135, 136 respectively. Merchants may act as suppliers on per-transaction basis.

The payment processing network 150 facilitates payment transactions between the merchants and suppliers, and in particular, facilitates authorisation, clearing, and settlement of such transactions in the manner as described above. To enable the authorisation, clearing, and settlement, the payment processing network 150 may gather payment records 152 in relation to each payment transaction.

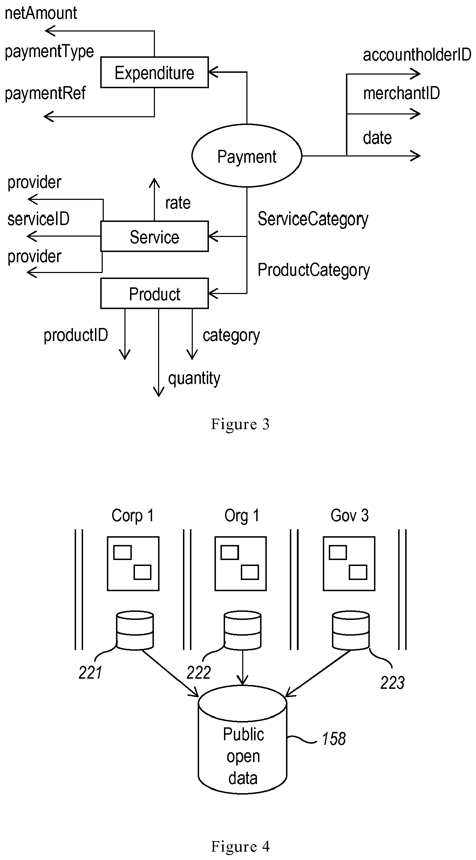

The payment records 152 may comprise resource description framework data (RDF data), which may facilitate semantic links between the payment records and between the payment records and other data sources. An example RDF data payload for a payment record is described in more detail with reference to Figure 3 below. The RDF data may be serialised using JSON-LD. In other embodiments, other RDF serialisation formats may be used. JSON-LD serialisation may be advantageous in some embodiment, since JSON format may be more human readable, and may comprise context for schema that are used.

The payment records 152 are collected to form a payment graph database 154. The payment graph database 154 is an RDF store, designed for the storage and retrieval of RDF data, thereby enabling efficient querying of a graph-based data set (for example using (SPARQL, GraphQL, HypergraphQL or the like).

Supply chain information may be extracted from the payment graph database 154, for example using a SPARQL, GraphQL, HypergraphQL query or the like, to produce data from which supply chain intelligence 156 can be determined. The supply chain intelligence may be determined using machine learning algorithms such as convolutional neural networks, decision trees, random forests, regression analysis or any other suitable technique.

In some embodiments, the RDF data of the payment records 152 may enable linking to open data from other sources, for example based on a common schema, and/or through the use of universal resource indicators (URIs) for describing information relating to the payment.

Referring to Figure 3, an example payment record 152 data structure is described, comprising service information, product information, expenditure information, accountholderID, merchantID and date. Each of the accountholderID and merchantID may comprise a URI enabling identification of the account holder and merchant involved in the payment transaction in external data sets, hosted on an external server (e.g. company records, census data, etc). The service information may comprise a serviceID URI that enables the service to be identified and related to external data sources relating to the service. The product information may comprise a productID URI (e.g. a global trade item number) that enables the product to be identified and related to external data sources (i.e. hosted on an external server) relating to the product (e.g. user sentiment, reviews, market price, sales rates etc). At least some of the payment record 152 ontology may be based on open schema that are interoperable with (i.e. can be linked with) open linked data.

Figure 4 illustrates an example source of external data that may be combined with the payment records in the payment graph database, in the form of public open data 158. The public open data 158 may be made available from corporations, charities, governmental organisations (or any other entity). Such entities may historically have held their data in siloed relational databases 221, 222, 223. Such data is increasingly being contributed to open data (e.g. which may also be termed the semantic web). The public open data 158 may for instance, comprise databases built on linked open public data, such as the EU open data portal and the linked open data cloud. Such data may be hosted on servers external to the payment network 150.

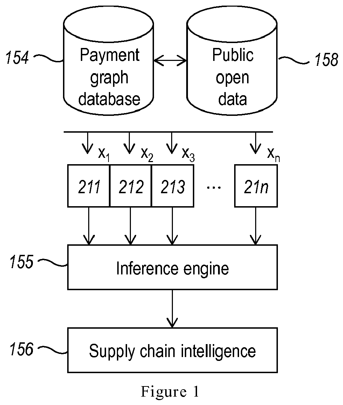

Organising the payment records in a graph database, and using RDF data comprising schema and URIs that are compatible with open public data, enables the efficient extraction of complex queries from the payment data to determine supply chain intelligence. This is illustrated in Figure 1, which shows the payment graph database 154 and public open data 158 may be linked to provide a data source that may be queried using a plurality of different queries x₁, x₂...xₙ (e.g. using SPARQL, GraphQL, HypergraphQL) to extract data 211, 212 ... 21n. The extracted data 211, 212...21n may, for example, provide information on a supply chain for a particular product (e.g. based on a productID URI from the graph database). One or more datasets extracted from the payment graph database 154 (and optionally combined with public open data 158) may be provided to an inference engine 155, which processes the data to determine supply chain intelligence.

An example of a sub-graph that may be extracted from the payment graph database 154 in combination with public open data 158 is illustrated in Figure 5, which illustrates a sub-graph relating to a supply chain for a particular productID. The flows of products and consequently the supply chain linking merchants and suppliers may be readily identified from data extracted from the payment graph database 154.

In the example sub-graph, merchants 131, 132, 133, 134, 135, 136 are shown as nodes, with edges 191, 192, 193, 194, 195, 196 indicating sales of the particular productID, which we can call "widget" for the purpose of exemplification. In this supply chain, the origin of the widgets in the supply chain is merchant 134. Merchant 135 receives goods from merchant 134, and sells to both merchant 136 and 132. Merchants 131 and 132 both in turn sell to merchant 133.

This information may be extracted from the payment graph database, for example based on the productID (="widget"), and accountHolderID and merchantID purchase records. In the example sub-graph, nodes 181, 182, 183, 184 represent information obtained from outside the payment graph database, for example from a public open data 158. Node 181 indicates a geographical region, and edge 197 indicates that merchant 131 is in region 181 (e.g. NY, USA). Node 182 indicates icy weather conditions, and edge 190 indicates that the icy weather conditions are associated with region 181. Node 183 indicates news reports of travel disruption, and edge 198 indicates the travel disruption news relates to region 181. Node 184 indicates power disruption, and edge 199 indicates that the power disruption applies to merchant 134.

Knowledge of the information in the sub-graph can be used to infer supply chain intelligence. In the present example, it is likely that the icy weather conditions and travel disruption are likely to have an adverse effect on the timeliness of deliver from merchant 131, which may in turn affect the timeliness of delivery from merchant 133. Similarly, the power disruption at merchant 134 is likely to affect the whole supply chain for "widget". Tracking specific stock items through the supply chain may enable quantitative estimates of the impact of disruptions to be determined.

Although this example relates to supply chain disruption, a similar sub-graph may be extracted to look at market share in a geographic region, or to determine where in a supply chain the most gross profit is accrued.

In some embodiments, the most relevant queries of linked data from the payment graph database 154 and public open data 158 may be determined by machine learning. The data (e.g. sub-graphs) may in turn be provided to machine learning algorithms that have been trained to identify supply chain intelligence from the data (e.g. a change in delivery time, breaking a service level agreement between a supplier and customer).

Although example embodiments have been described, it will be appreciated that other variations are possible, within the scope of the invention, which should be determined with reference to the appended claims.

## Claims

1. A computer implemented method of providing supply chain intelligence, comprising:
receiving, at a server of a payment processing network, a plurality of payment records, wherein each payment record results from an account holder tendering payment to a merchant for a product/service to authorise a transfer of funds from an issuer account to an acquirer account using an account identifier, wherein each payment record comprises RDF data, and each payment record comprises product/service information identifying the product/service;
generating a payment graph database from the payment records;
extracting payment data from the payment graph database;
processing the payment data to determine the supply chain intelligence.

2. The method of claim 1, wherein the method further comprises linking the payment graph database to an open database hosted on an external server.

3. The method of claim 2, wherein the step of extracting data further comprises extracting open data from the open database and linking this to the payment data, and the step of processing comprises processing the payment data and open data to determine the supply chain intelligence.

4. The method of claim 3, wherein the open data comprises at least one of: weather data; transportation disruption data; sentiment analysis data; and maintenance data.

5. The method of any preceding claim, further comprising identifying supply chains comprising a sequence of transactions between sequential merchants comprising the same product/service information.

6. The method of any preceding claim, wherein a schema of the payment records is selected to be consistent with a schema defined in the open database, so that data hosted in the open database can be related to data in the payment graph database.

7. The method of claim 1 or 2, wherein extracting the data from the graph database comprises using a GraphQL or SPARQL query to extract data from the graph database.

8. The method of any preceding claim, wherein processing the data to determine the supply chain intelligence comprises providing the data to a neural network.

9. The method of any preceding claim, wherein the supply chain intelligence comprises a gross profit margin for a merchant.

10. The method of any preceding claim, wherein the supply chain intelligence comprises a supply chain disruption and/or a service level agreement overrun.

11. The method of any preceding claims, wherein the payment record comprises a payment amount.

12. The method of any preceding claim, wherein the product/service information comprises a global trade item number.

13. The method of any preceding claim, wherein the product/service information comprises a URI indicating the product/service.

14. A non-transitory, machine readable medium for configuring a computer to implement the method defined in any preceding claim.

15. A computing system configured to perform the method of any of claims 1 to 13.
